# FASCICULE DE BREVET EUROPEEN

(11) **EP 2 349 678 B1**
(45) Date de publication et mention de la délivrance du brevet: **11.05.2016**
(21) Numéro de dépôt: 09760943.2
(22) Date de dépôt: 17.11.2009
(51) Int. Cl.: B29C 49/48, B65D 1/02, B29C 49/06, B29C 49/12

(54) **MOULE POUR LE SOUFFLAGE DE RECIPIENTS A FOND RENFORCE, UTILISATION DE CE MOULE ET RECIEPENT**
FORM ZUM BLASEN VON BEHÄLTERN MIT VERSTÄRKTEM BODEN, VERWENDUNG DIESER FORM UND BEHÄLTER
MOULD FOR BLOWING VESSELS WITH REINFORCED BOTTOM, USING THIS MOULD AND CONTAINER

(30) Priorité: 19.11.2008 FR 0806473
(43) Date de publication de la demande: 03.08.2011
(73) Titulaire: Sidel Participations, 76930 Octeville sur Mer (FR)
(72) Inventeur: DERRIEN, Mickaël, F-76930 Octeville sur Mer (FR); BOUKOBZA, Michel, F-76930 Octeville sur Mer (FR)
(74) Mandataire: Siloret, Patrick
(86) Numéro de dépôt international: PCT/FR2009/001316
(87) Numéro de publication internationale: WO 2010/058098

(56) Documents cités:
- WO-A-99/52701
- WO-A-2006/103344
- FR-A1- 2 926 035
- JP-A- 3 076 625
- JP-A- 6 270 235
- JP-A- 2002 127 237
- JP-A- 2003 165 519
- JP-A- 2009 202 925
- JP-U- 3 004 582
- JP-U- 56 032 015
- JP-U- 60 106 905
- US-A- 4 035 455
- US-A- 4 177 239

## Description

L'invention se rapporte à la fabrication des récipients, tels que bouteilles ou pots, obtenus par soufflage ou étirage soufflage à partir d'ébauches en matière thermoplastique.

Pour fabriquer un récipient suivant la technique du soufflage, on commence par chauffer une ébauche (qu'il s'agisse d'une préforme ou d'un récipient intermédiaire ayant subi une première opération de soufflage à partir d'une préforme) à une température supérieure à la température de transition vitreuse de la matière constitutive de l'ébauche. On introduit ensuite l'ébauche dans un moule, puis on effectue le soufflage de l'ébauche en y injectant un gaz (tel que de l'air) sous haute pression (généralement supérieure à 30 bars).

La technique de l'étirage soufflage consiste, outre le soufflage, à étirer l'ébauche au moyen d'une tige coulissante, afin de minimiser le désaxement du récipient et d'uniformiser autant que possible la répartition de la matière.

Le moule comprend une paroi définissant une cavité destinée à conférer sa forme au corps du récipient. Cette cavité est fermée, à une extrémité inférieure, par un fond de moule destiné à conférer sa forme au fond du récipient.

Les récipients subissent au cours du soufflage une double orientation moléculaire : axiale d'une part, parallèlement à l'axe général du moule ; radiale d'autre part, perpendiculairement à l'axe du moule. Cette bi-orientation confère aux récipients une certaine rigidité structurelle.

L'un des buts principaux visés aujourd'hui par les fabricants est la diminution de la quantité de matière utilisée, ce qui se traduit par une réduction du poids des récipients. En contrepartie de cet allègement des récipients, il est nécessaire d'accroître leur rigidité au moyen d'artefacts liés soit au procédé de fabrication, soit au design, la rigidité structurelle liée à la seule bi-orientation apparaissant insuffisante. Il arrive même que certains cahiers des charges (notamment pour des applications de remplissage à chaud) préconisent dans le même temps la réduction du poids et l'accroissement de la rigidité.

Plusieurs solutions ont été proposées par le passé pour accroître la rigidité structurelle des récipients.

Une première solution, illustrée par brevet français FR 2 595 294 (Sidel) et son équivalent américain US 4,836,971, consiste à procéder au soufflage du récipient en deux étapes (et dans deux moules différents) : une première au cours de laquelle est formé un récipient intermédiaire de plus grand volume que le récipient à obtenir, puis une seconde au cours de laquelle le récipient est moulé à ses dimensions définitives. Compte tenu de la difficulté technique de mise en oeuvre et du temps de cycle relativement élevé (deux à trois fois plus élevé que celui d'un procédé ordinaire), cette solution est toutefois peu répandue.

Une deuxième solution, illustrée par le brevet français FR 2 649 035 (Sidel) et son équivalent américain US 5,145,632, consiste à chauffer la paroi du moule, ce qui confère au récipient maintenu à son contact une rigidité supplémentaire due à l'augmentation du taux de cristallinité (on parle de thermofixation).

Cette solution a fait ses preuves. De fait, elle est largement répandue dans les applications HR (Heat Résistant) dans lesquelles les récipients sont destinés à résister à un remplissage à chaud, c'est-à-dire en pratique à une température (de l'ordre de 85 à 95°C) supérieure à la température de transition vitreuse de la matière constitutive des récipients.

Cette solution présente toutefois plusieurs inconvénients.

D'abord, dans la mesure où il est nécessaire de maintenir le récipient en contact avec la paroi du moule pendant une durée relativement longue par rapport à la durée totale du cycle, à capacité de production équivalente la cadence de fabrication est toujours inférieure à celle des procédés ordinaires. De ce fait, la thermofixation n'a pas été généralisée mais est généralement limitée aux seules applications HR, qui compte tenu des produits concernés (jus de fruits, thé), à forte marge, justifient l'emploi de récipients haut de gamme.

Ensuite, il persiste une difficulté à conférer au fond du récipient, pourtant amené à se déformer non seulement sous l'effet de la pression hydrostatique mais également sous l'effet de la chaleur lors d'un remplissage à chaud, la rigidité structurelle qui convient. En effet, on observe de manière quasi systématique, quelle que soit la forme du récipient, une épaisseur de matière plus importante au fond du récipient que dans le corps. La raison en est que le taux de déformation (c'est-à-dire le rapport entre la surface finale et la surface initiale) du fond est plus faible que celui du corps. On note même la présence, au fond, de zones que l'on peut qualifier d'amorphes (ayant un taux de cristallinité inférieur à 20% environ) ou quasi-amorphes (ayant un taux de cristallinité compris entre 20% et 25% environ), que même une thermofixation ne parvient à résorber, sauf à prévoir des temps de cycles inacceptables industriellement.

Une solution technique a été proposée pour augmenter la rigidité structurelle du fond, par augmentation de son taux de déformation. Suivant cette solution, qui peut être combinée ou non à une thermofixation, le récipient est d'abord étiré au-delà de sa hauteur finale avant d'être complètement soufflé à la bonne hauteur. À cet effet, le fond de moule est monté mobile axialement par rapport à la paroi du moule. Dans un premier temps, le fond de moule est placé en position basse et le récipient subit une déformation axiale par étirement jusqu'à ce que la tige d'élongation atteigne le fond de moule. Le fond de moule est alors remonté en position haute et, tandis que le soufflage se poursuit, le récipient est plaqué contre le fond de moule. Cette technique, appelée boxage, permet, en étirant le fond au-delà de sa position normale, d'accroître son taux de déformation et donc sa cristallinité. En outre, on constate une diminution de l'épaisseur du fond, ce qui permet non seulement d'envisager une baisse de la quantité de matière, mais également de réaliser une meilleure thermofixation.

La technique du boxage, illustrée notamment dans le brevet européen EP 1 069 983, ne va cependant pas sans inconvénients. La principale difficulté est de synchroniser le mouvement d'ascension du fond de moule avec le soufflage du récipient. En effet, si l'étirage est à chaque instant sous contrôle, via le positionnement de la tige d'élongation, le soufflage comporte des incertitudes quant à la manière dont se développe la bulle d'air au sein de l'ébauche. Plus exactement, si l'on connaît le profil général du développement de la bulle, il peut exister d'un récipient à l'autre des variations affectant ce profil en raison des inégalités de répartition de la matière comme de la température. Aussi, remonter le fond de moule trop tôt peut conduire à un fond insuffisamment étiré. A contrario, le remonter trop tard peut provoquer un débordement de la matière sur la périphérie du fond de moule et un pincement du bourrelet ainsi créé, entre la paroi du moule et le fond de moule lors de la remontée de celui-ci. Dans un cas comme dans l'autre, le récipient n'est pas conforme et doit être éliminé.

Le brevet américain US 4,177,293 présente un moule pour la fabrication, par soufflage à partir d'ébauches en matière plastique, de récipients ayant un corps et un fond et présentant un fond mobile. Le brevet japonais JP03076625 divulgue un récipient selon le préambule de la revendication 7.

Les objectifs suivants ont animé les inventeurs qui ont souhaité proposer des solutions remédiant aux inconvénients précités :
- améliorer la tenue mécanique des récipients, notamment lors du remplissage à chaud ;
- ou, tout du moins, permettre, à tenue mécanique au moins équivalente, une diminution du poids des récipients. À cet effet, l'invention propose un moule pour la fabrication, par soufflage à partir d'ébauches en matière plastique, de récipients ayant un corps et un fond, ce moule comprenant une paroi définissant une cavité répartie autour d'un axe principal du moule et comprenant une surface latérale destinée à conférer sa forme au corps du récipient, ladite paroi présentant, dans une partie inférieure, une ouverture définissant un passage pour un fond de moule dont une surface supérieure est destinée à conférer au moins en partie sa forme au fond du récipient, moule dans lequel, dans tout plan contenant l'axe de la paroi :
   - le rapport entre une dimension transversale d'un bord supérieur de l'ouverture et une dimension transversale d'une extrémité inférieure de la surface latérale de la paroi est supérieur à 0,95, et
   - la tangente à la surface latérale de la paroi, à l'extrémité inférieure de celle-ci, forme avec l'axe de la paroi un angle inférieur ou égal à 30°.

Selon un mode particulier de réalisation, la tangente à la surface latérale de la paroi, à l'extrémité inférieure de celle-ci, forme avec l'axe de la paroi un angle inférieur ou égal à 10°.

Par ailleurs, le rapport entre la dimension transversale du bord supérieur de l'ouverture et la dimension transversale de l'extrémité inférieure de la surface latérale de la paroi peut être égal à 1, la paroi étant dépourvue de rebord annulaire à son extrémité inférieure.

En variante, la paroi présente, autour de l'ouverture, un rebord annulaire présentant une surface supérieure radiale, et en ce que la paroi est dépourvue de congé de raccordement à la jonction entre la surface latérale et cette surface supérieure radiale.

Le moule comprend en outre un fond de moule présentant une surface supérieure formant une empreinte d'un fond de récipient et dont une dimension transversale, mesurée au niveau du bord de cette surface supérieure, est égale, au jeu de fonctionnement près, à la dimension transversale du bord supérieur de l'ouverture, ce moule étant monté mobile par rapport à la paroi entre une position basse dans laquelle le fond de moule est écarté de l'ouverture, et une position haute dans laquelle le fond de moule obture l'ouverture.

Suivant un autre aspect, l'invention propose un récipient en matière plastique, comprenant un corps et un fond ayant une dimension transversale prédéterminée, et présentant un congé de raccordement à la jonction entre le corps et le fond, récipient dans lequel le rapport du rayon du congé de raccordement et de la dimension transversale du fond est inférieur à 1/50 environ.

Grâce à ces dispositions, ce récipient présente, par rapport à un récipient ordinaire, une assise (également dénommée « plan de pose ») plus large et plus rigide. Il en résulte une stabilité accrue du récipient en utilisation courante.

Le rayon du congé de raccordement est par exemple inférieur à 1 mm, et notamment égal à 0,5 mm environ.

D'autres objets et avantages de l'invention apparaîtront à la lumière de la description faite ci-après en référence aux dessins annexés dans lesquels :
- la figure 1 est une vue d'élévation en coupe illustrant un moule selon une réalisation connue, montré en position basse du fond de moule ;
- la figure 2 est une vue d'élévation en coupe illustrant le moule de la figure 1, montré avec un récipient en cours de soufflage, dans une position intermédiaire du fond de moule ;
- la figure 3 est une vue d'élévation en coupe illustrant le moule des figures 1 et 2, en position haute (finale) du fond de moule ;
- la figure 4 est une vue en coupe partielle montrant un récipient réalisé par étirage soufflage dans un moule tel que représenté aux figures 1 à 3 ;
- la figure 5 est une vue en coupe partielle montrant, à échelle agrandie, un détail du récipient de la figure 4, suivant l'encart V;
- la figure 6 est une vue d'élévation en coupe illustrant un moule conforme à l'invention, montré en position basse du fond de moule, selon un premier exemple de réalisation ;
- la figure 7 est une vue en coupe montrant, à échelle agrandie, un détail du moule de la figure 6 ;
- la figure 8 est une vue d'élévation en coupe illustrant le moule de la figure 6, montré avec un récipient en cours de soufflage, dans une position intermédiaire du fond de moule ;
- la figure 9 est une vue d'élévation en coupe illustrant le moule des figures 6 et 7, en position haute (finale) du fond de moule ;
- la figure 10 est une vue en coupe partielle montrant un récipient réalisé par étirage soufflage dans un moule tel que représenté aux figures 6 à 9 ;
- la figure 11 est une vue en coupe partielle montrant, à échelle agrandie, un détail du récipient de la figure 10, suivant l'encart XI ;
- la figure 12 est une vue d'élévation en coupe illustrant un moule conforme à l'invention, montré en position basse du fond de moule, selon un deuxième exemple de réalisation ;
- la figure 13 est une vue en coupe montrant, à échelle agrandie, un détail du moule de la figure 12 ;
- la figure 14 est une vue d'élévation en coupe illustrant le moule de la figure 12, montré avec un récipient en cours de soufflage, dans une position intermédiaire du fond de moule ;
- la figure 15 est une vue d'élévation en coupe illustrant le moule des figures 12 et 13, en position haute (finale) du fond de moule ;
- la figure 16 est une vue en coupe partielle montrant un récipient réalisé par étirage soufflage dans un moule tel que représenté aux figures 12 à 15 ;
- la figure 17 est une vue en coupe partielle montrant, à échelle agrandie, un détail du récipient de la figure 16, suivant l'encart XVII.

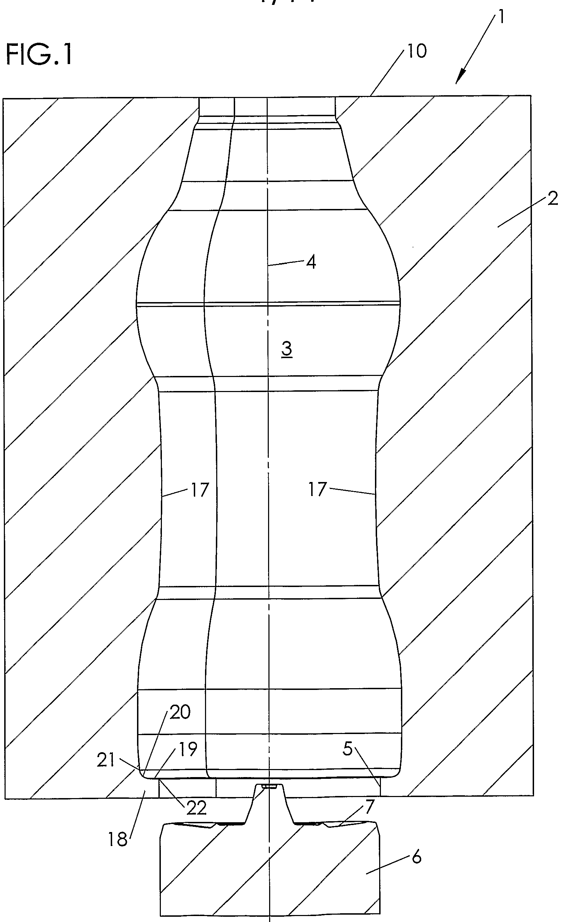

Sur la figure 1 est représenté un moule **1** conforme à une réalisation connue, pour la fabrication de récipients par étirage soufflage à partir d'ébauches en matière plastique.

Ce moule **1** comprend une paroi **2** définissant une cavité **3** interne répartie autour d'un axe **4** principal du moule, qui lorsque les récipients à former sont symétriques de révolution, forme un axe de symétrie du moule **1**.

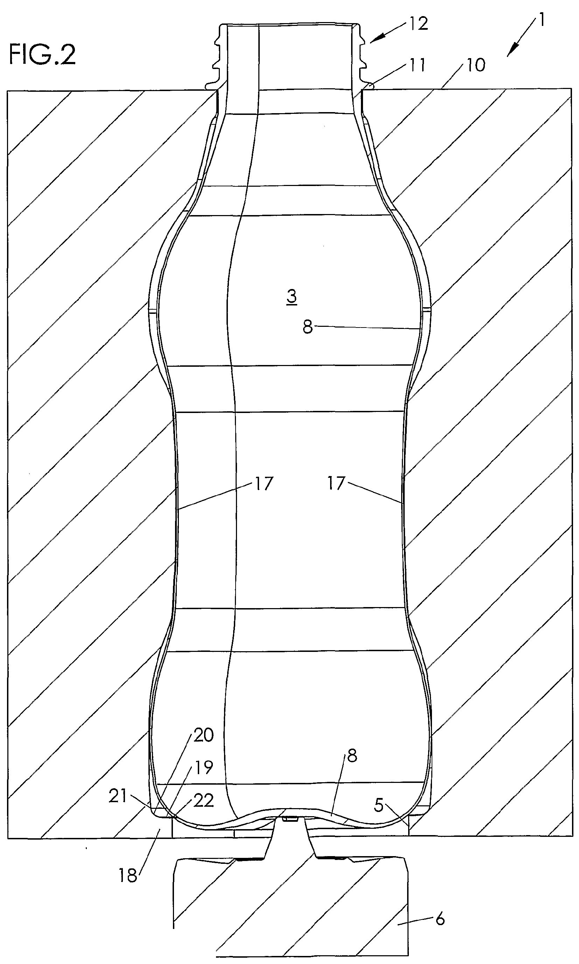

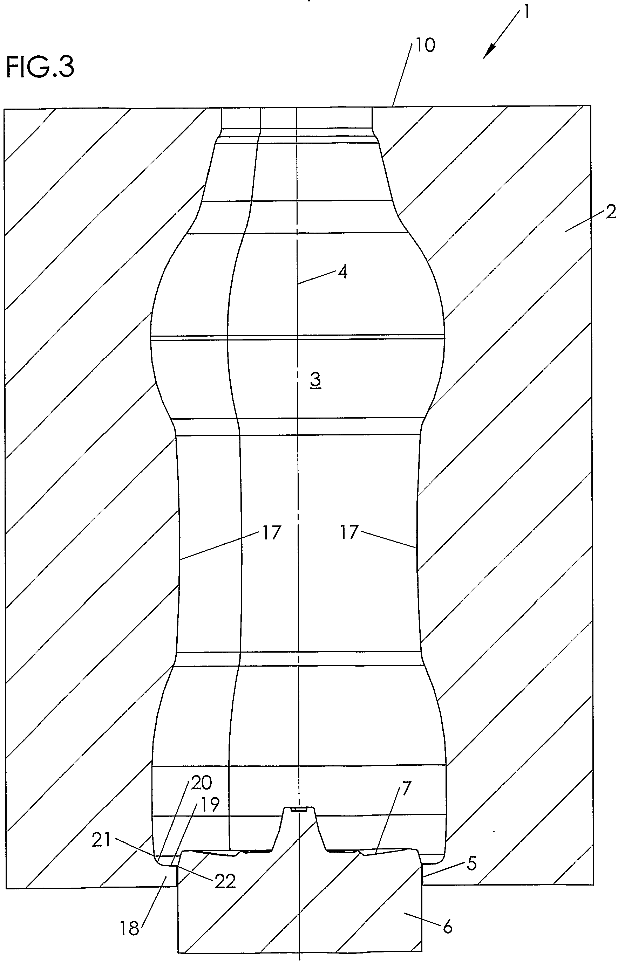

La paroi **2** présente, dans une partie inférieure, une ouverture **5** définissant un passage pour un fond **6** de moule monté mobile par rapport à la paroi **2** entre une position basse, illustrée sur les figures 1 et 2, dans laquelle le fond **6** de moule est écarté de l'ouverture **5** vers le bas, et une position haute, illustrée sur la figure 3, dans laquelle le fond **6** de moule obture l'ouverture **5**. Le fond **6** de moule présente une surface **7** supérieure qui, en position haute du moule **1**, ferme la cavité **3**, complétant ainsi l'empreinte contre laquelle est appliquée l'ébauche **8** de récipient lors du soufflage.

Comme cela est représenté sur la figure 2, l'ébauche **8**, puis le récipient **9** formé à partir de celle-ci, reposent sur une face **10** supérieure du moule **1** par l'intermédiaire d'une collerette **11**, qui délimite un col **12** du récipient **9**, maintenu hors du moule **1**.

Sous la collerette **11**, le récipient **9** présente un corps **13**, qui s'étend globalement suivant la direction axiale, et un fond **14**, qui s'étend globalement suivant la direction radiale à partir d'une extrémité inférieure **15** du corps **13**.

À la jonction entre le corps **13**, à l'extrémité inférieure **15** de celui-ci, et le fond **14**, le récipient **9** présente un congé **16** de raccordement ayant un profil en arc de cercle.

La paroi **2** présente une surface **17** latérale qui s'étend globalement suivant la direction axiale, et forme l'empreinte du corps **13** du récipient **9**.

Comme cela est visible sur les figures 1 à 3, la paroi **2** présente, autour de l'ouverture **5**, un rebord **18** annulaire saillant. Ce rebord **18** présente une surface **19** supérieure annulaire, qui s'étend radialement, sensiblement perpendiculairement à la surface **17** latérale. Un congé **20** de raccordement à profil en arc de cercle fait la jonction entre la surface **17** latérale, à une extrémité **21** inférieure de celle-ci, et la surface **19** annulaire.

La surface **19** annulaire se termine, vers l'intérieur (c'est-à-dire en direction de l'axe), par un bord **22** formant une arête vive qui délimite l'ouverture **5** vers le haut, du côté de la cavité **3**.

La combinaison de cette surface **19** annulaire avec la surface **7** supérieure du fond **6** de moule forme l'empreinte complète du fond **14** du récipient **9**, tandis que le congé **20** forme l'empreinte du congé **16** de raccordement entre le corps **13** et le fond **14** du récipient **9**.

Pour fabriquer le récipient **9** à partir d'une ébauche **8** (en pratique il s'agit généralement d'une préforme obtenue par injection), on procède comme suit.

Le moule **1** étant dans sa configuration illustrée sur la figure 1, avec le fond **6** de moule dans sa position basse, on y introduit la préforme préalablement chauffée.

On commence à étirer la préforme au moyen d'une tige d'élongation, tout y en insufflant de l'air à une pression de présoufflage (inférieure à 15 bars).

Dès lors que l'étirage est terminé, c'est-à-dire dès lors que la tige d'élongation a atteint le fond **6** de moule, on insuffle dans l'ébauche **8** de l'air à une pression de soufflage (supérieure à 30 bars), et on commande la remontée du fond **5** de moule de sa position illustrée basse sur la figure 2 vers sa position haute illustrée sur la figure 3, provoquant ainsi le boxage du fond **6**.

Sous la pression de soufflage, l'ébauche **8** est alors complètement plaquée contre son empreinte, formée par l'ensemble des surfaces suivantes :
- la surface **17** latérale de la paroi **2**, qui forme le corps **13** du récipient **9** ;
- la surface **19** supérieure annulaire du rebord **18** et la surface **7** supérieure du fond **6** de moule, qui forment conjointement le fond **14** du récipient **9** ;
- le congé **20** de raccordement entre la surface **17** latérale de la paroi **2** et la surface **19** supérieure annulaire du rebord **18**, qui forme le congé **16** de raccordement entre le corps **13** et le fond **14** du récipient **9**.

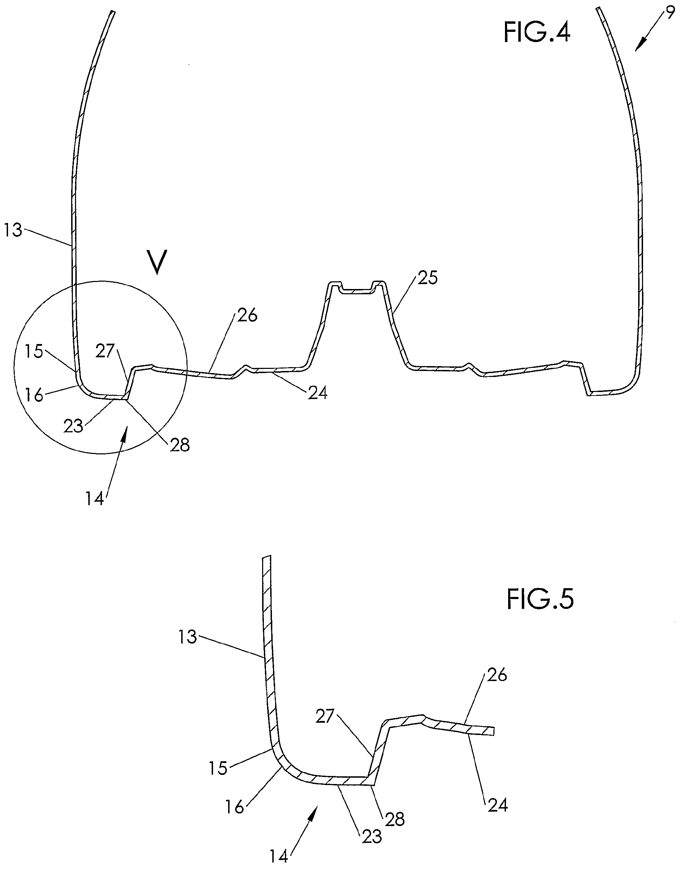

Comme cela est illustré sur les figures 4 et 5, le fond **14** du récipient **8** présente une surface **23** externe annulaire, qui jouxte le congé **16** et correspond à la contre-empreinte de la surface **19** supérieure annulaire du rebord **18** et se prolonge, vers l'intérieur, par une voûte **24**.

La voûte **24** est divisée en trois régions concentriques, à savoir, depuis le centre vers la périphérie :
- un pion **25** central, qui s'étend en saillie vers l'intérieur du récipient **8** ;
- une membrane **26** annulaire flexible (prévue pour fléchir sous l'effet d'un remplissage à chaud, puis pour retrouver sa position initiale lors du refroidissement du liquide), qui s'étend radialement à partir du pion **25** ;
- une marche **27** annulaire, qui s'étend sensiblement axialement à la périphérie de la membrane **26** annulaire et relie celle-ci à la surface **23** externe annulaire.

Une portion **28** annulaire de la surface externe, localisée à la jonction avec la marche **27**, forme une assise du récipient **9**, par lequel celui-ci est en contact avec tout support plan sur lequel il est posé à plat.

La forme de réalisation qui vient d'être décrite, qui est connue et correspond à une technique couramment employée pour les applications HR, est, de l'avis des inventeurs, perfectible.

En particulier, le fond **14** présente une rigidité structurelle insuffisante pour autoriser une quelconque économie de matière.

Les inventeurs ont réfléchi à des modifications de la structure du moule **1** afin notamment de permettre un meilleur étirage du fond **14** du récipient **8** lors de sa fabrication.

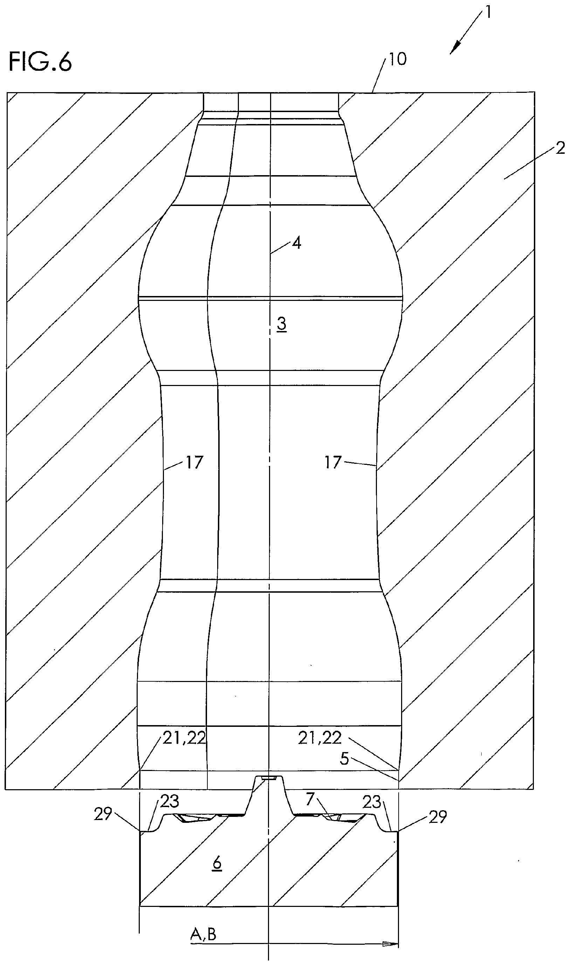

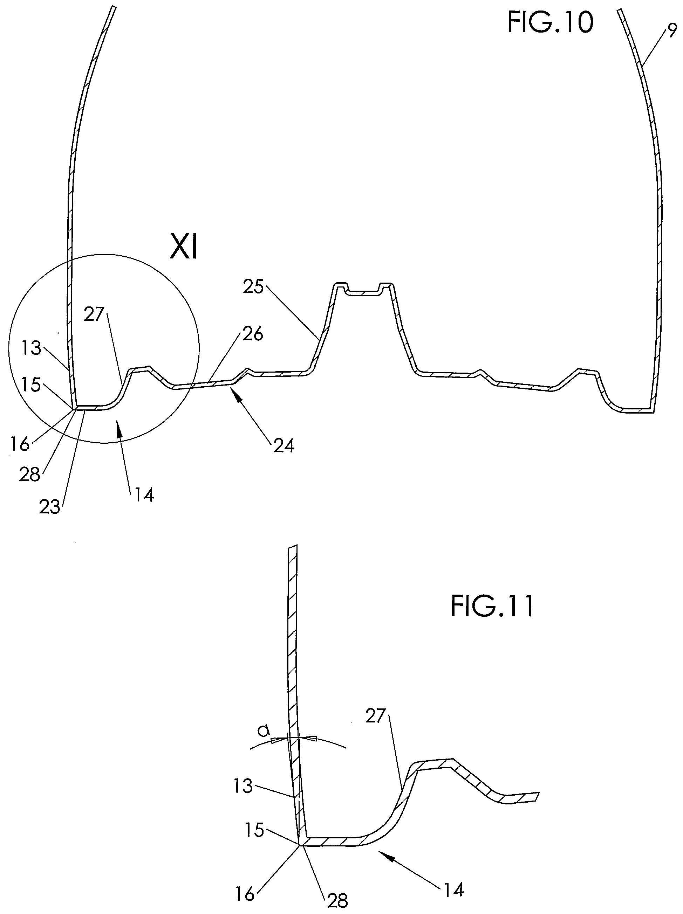

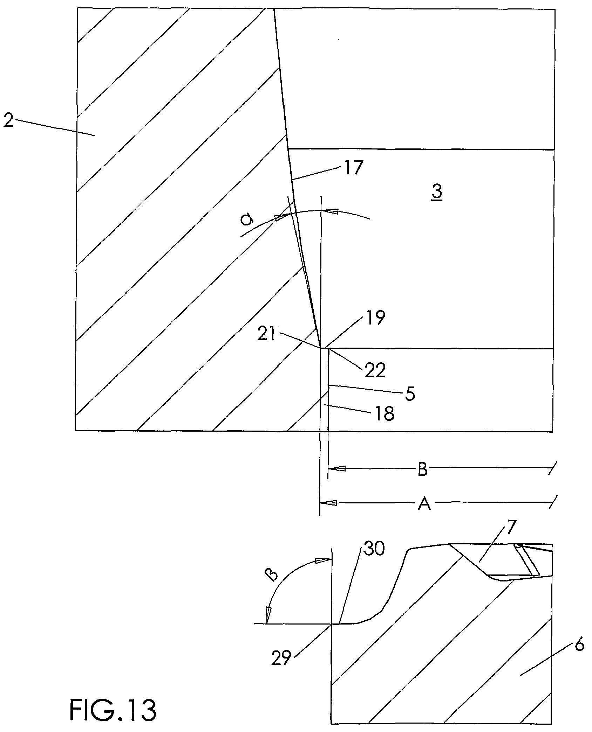

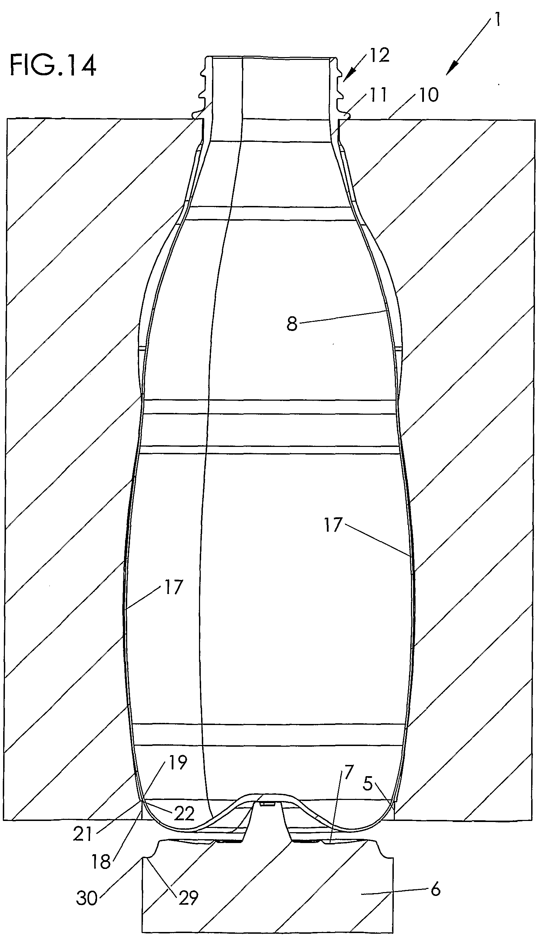

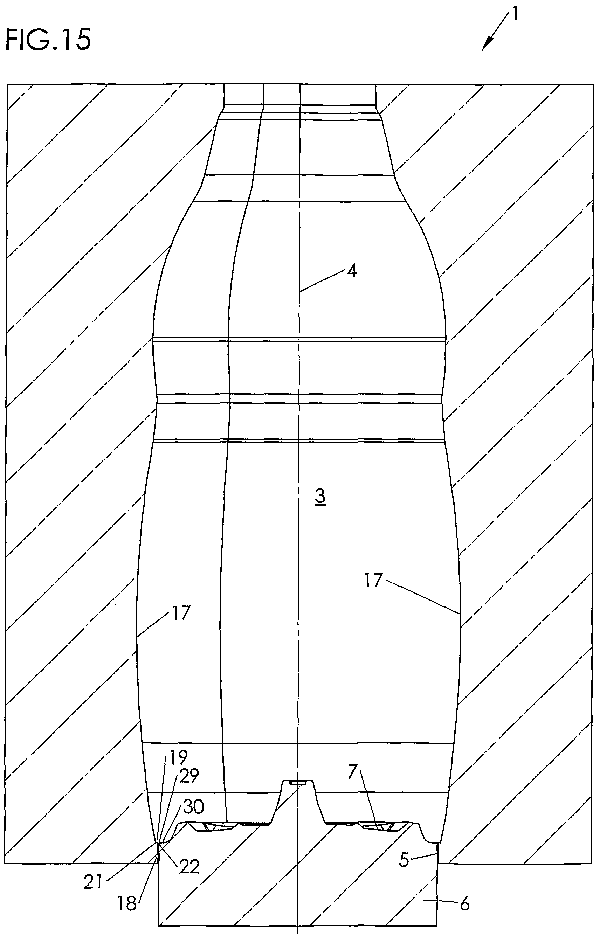

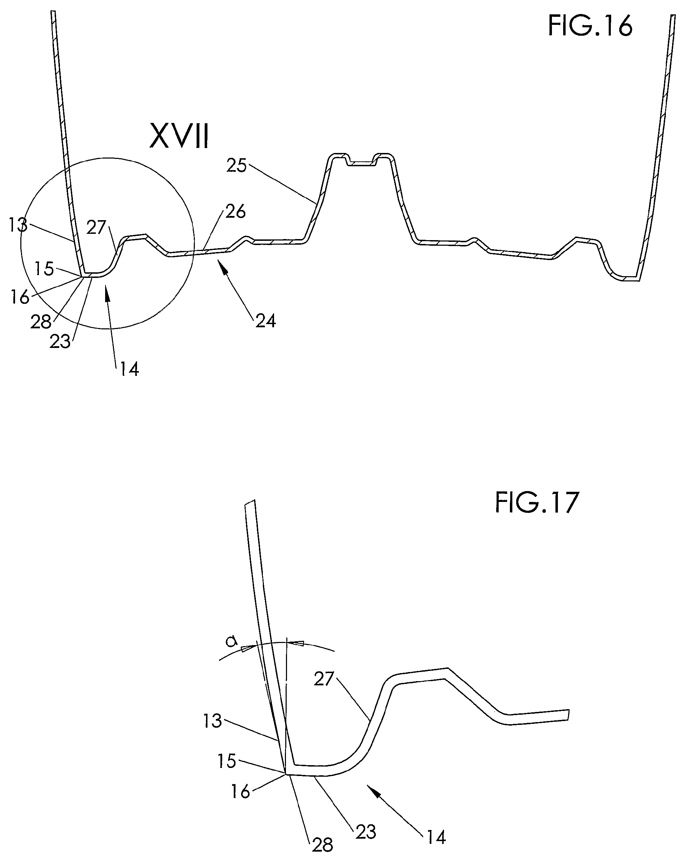

On décrit ci-après deux exemples de réalisation proposant de telles modifications de structure, en référence respectivement aux figures 6 à 11 et 12 à 17. À des fins de simplification, Les éléments communs aux deux exemples de réalisation et à la forme de réalisation connue décrite ci-dessus sont référencés de manière identique.

Dans ce qui suit, les caractéristiques dimensionnelles, et notamment les rapports de diamètres ou de dimensions transversales, de même que les angles, sont toutes explicitées dans un seul et même plan contenant l'axe **4**, qui correspond au plan de coupe.

### Exemple 1 (figures 6 à 11)

Comme précédemment, le moule **1** comprend une paroi **2** définissant une cavité **3** interne répartie autour de l'axe **4** principal du moule **1**.

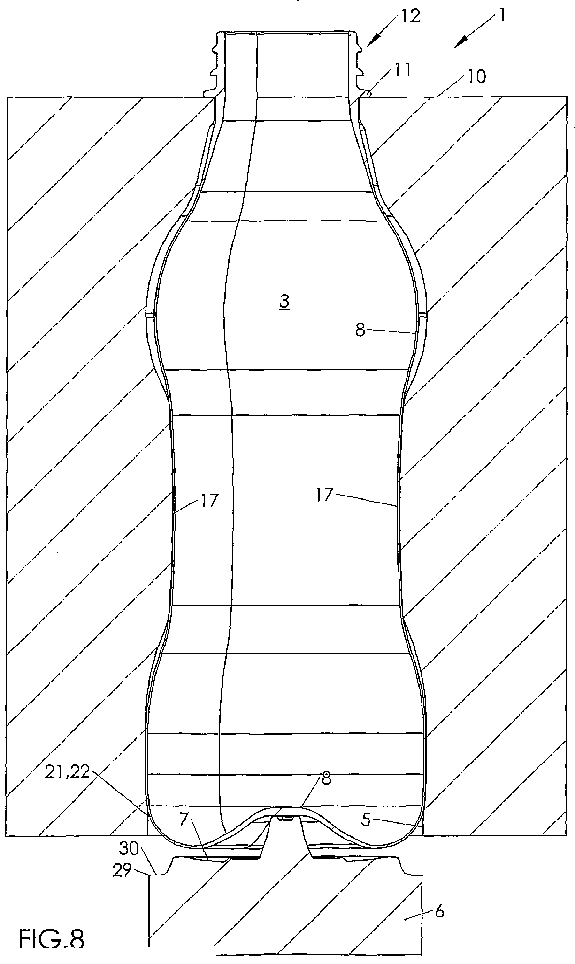

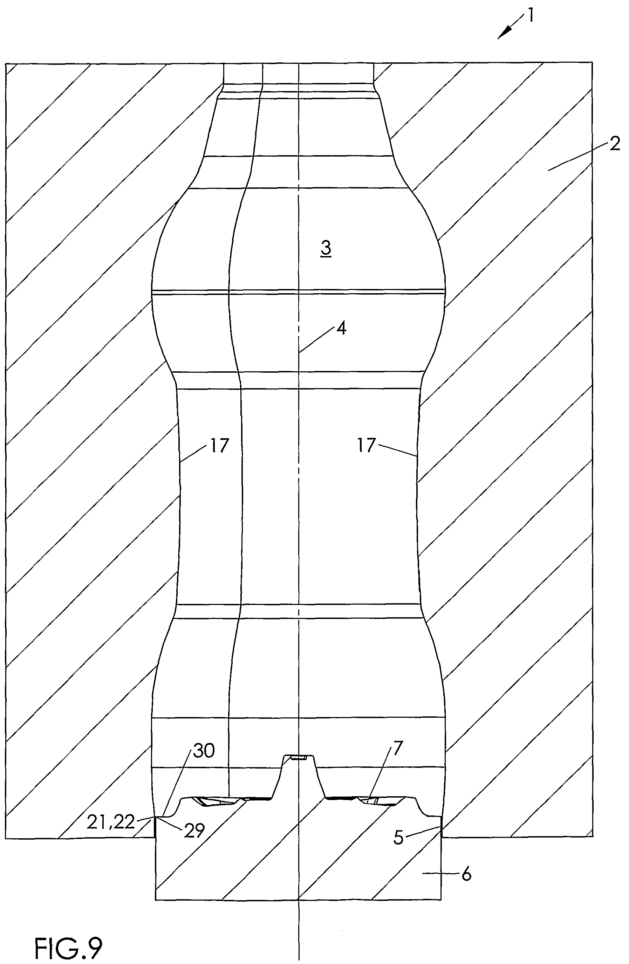

Une ouverture **5** est prévue dans la partie inférieure du moule **1** pour permettre le passage du fond **6** de moule, monté mobile par rapport à la paroi **2** entre sa position basse, illustrée sur les figures 6 et 8, dans laquelle le fond **6** de moule est écarté de l'ouverture **5** vers le bas, et sa position haute, illustrée sur la figure 9, dans laquelle le fond **6** de moule obture l'ouverture **5**.

Comme précédemment, dans sa position haute, le fond **6** de moule ferme la cavité **3** et complète l'empreinte contre laquelle est appliqué l'ébauche **8** lors du soufflage.

En revanche, à la différence de la forme de réalisation connue, l'empreinte du fond **14** du récipient **9** est formée en totalité sur le fond **6** de moule, et plus précisément par la surface **7** supérieure de celui-ci.

Comme cela est visible en effet sur la figure 5, et plus en détail sur la figure 6, la paroi **2** ne comprend, à la différence de la forme de réalisation connue, aucun rebord annulaire dans sa partie inférieure, le bord **22** supérieur de l'ouverture **5** étant confondu avec l'extrémité **21** inférieure de la surface **17** latérale de la paroi **2** formant l'empreinte du corps **13** du récipient **9**.

Le rapport des dimensions du fond de moule et de la paroi du moule sont en effet modifiés, la dimension **B** transversale (c'est-à-dire, dans le cas d'une cavité **3** présentant une symétrie de révolution, le diamètre extérieur) du fond **6** de moule au niveau de sa surface **7** supérieure étant sensiblement égale à la dimension **A** transversale de la surface **17** latérale de la paroi **2**, mesurée au niveau de son extrémité **21** inférieure.

Cette particularité structurelle peut être caractérisée sur la paroi **2** du moule **1** elle-même, dans la mesure où seul un jeu de fonctionnement distingue la dimension **B** transversale de la surface **7** supérieure du fond **6** de moule, mesurée au niveau de son bord **29** extérieur, de la dimension transversale (que l'on notera également **B**) de la paroi **2**, mesurée au niveau du bord **22** supérieur de l'ouverture **5**.

Ainsi, dans ce premier exemple de réalisation, la dimension **B** transversale du bord **22** supérieur de l'ouverture **5** est égal à la dimension **A** transversale de la surface **17** latérale, mesurée au niveau de son extrémité **21** inférieure.

En outre, la surface **17** latérale de la paroi est, au voisinage son extrémité **21** inférieure, sensiblement verticale, c'est-à-dire qu'elle s'étend sensiblement axialement.

Concrètement, on peut traduire cette caractéristique par une prescription angulaire : la tangente à la surface **17** latérale de la paroi, mesurée à l'extrémité **21** inférieure de celle-ci, forme avec l'axe **4** de la paroi **2** un angle α inférieur ou égal à 30°, et de préférence inférieur à 10°. Bien entendu, il est possible de réaliser une surface **17** latérale avec un angle α de tangente nul (c'est-à-dire que la surface **17** latérale est tubulaire au voisinage de son extrémité inférieure). Dans l'exemple illustré, cet angle α est de 7° environ.

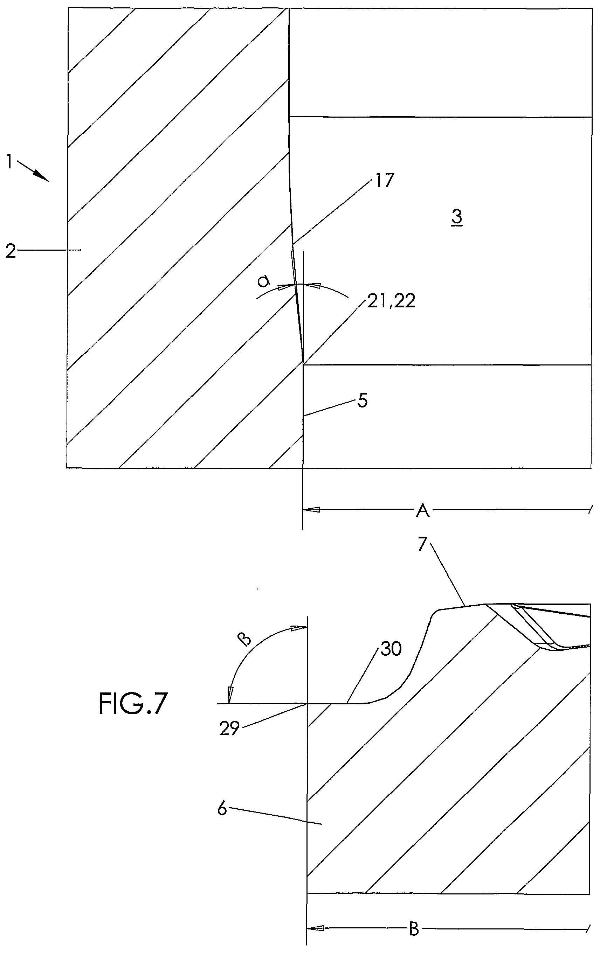

Comme cela est visible sur la figure 6, et plus en détail sur la figure 7, la surface **7** supérieure du fond **6** de moule présente, sur sa périphérie, une portion **30** annulaire qui s'étend sensiblement dans un plan radial. En outre, la tangente à la surface **7** supérieure du fond **6** de moule, au niveau de son bord **29** extérieur, forme avec l'axe un angle (3 droit ou sensiblement droit. Comme, en position haute du fond **6** de moule, le bord **29** extérieur du fond **6** de moule se trouve au niveau de l'extrémité **21** inférieure de la surface **17** latérale, on comprend que la jonction entre la paroi **2** latérale et la surface **7** supérieure du fond 6 de moule se présente sous forme d'un pan coupé (en faisant abstraction du jeu de fonctionnement entre le fond **6** de moule et l'ouverture **5**).

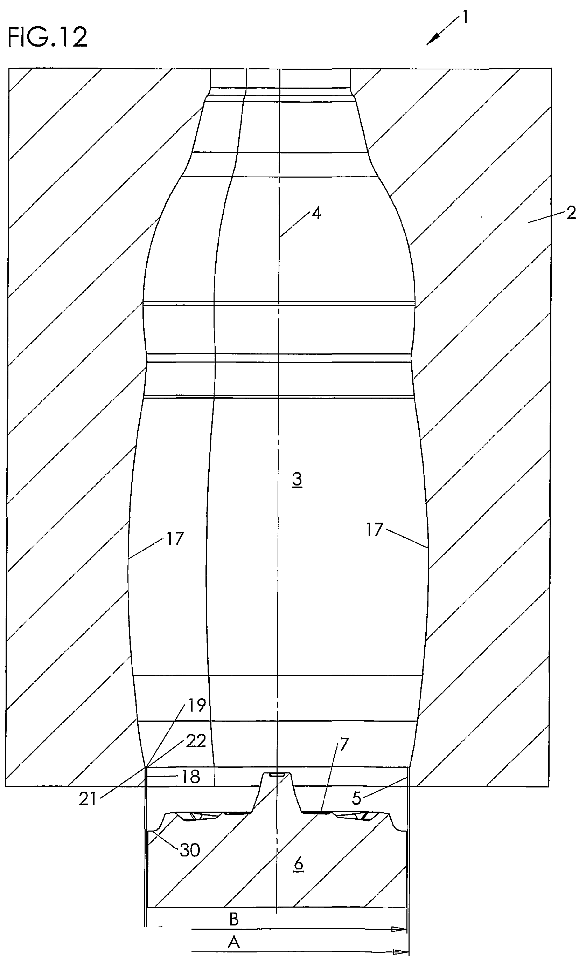

### Exemple 2 (figures 12 à 17)

Pour d'évidentes raisons de concision, nous ne décrivons pas à nouveau les dispositions communes au premier exemple (les références numériques correspondantes étant reportées sur les figures).

Ce deuxième exemple de réalisation se distingue du premier par la présence, dans la partie inférieure de la paroi **2**, autour de l'ouverture **5**, d'un rebord **18** annulaire en saillie, de faible extension radiale, qui présente une surface **19** supérieure s'étendant dans un plan transversal sensiblement perpendiculaire à l'axe **4**, et formant l'empreinte de l'assise **28** du récipient **9**.

En d'autres termes, il existe un léger décalage, mesuré radialement, entre l'extrémité **21** inférieure de la surface **17** latérale de la paroi **2**, et le **22** bord supérieur de l'ouverture **5**. Plus exactement, le rapport entre la dimension **B** transversale du bord **22** supérieur de l'ouverture **5** et la dimension **A** transversale de l'extrémité **21** inférieure de la surface **17** latérale est supérieur à 0,95. Dans l'exemple illustré, ce rapport est égal à 0,98 environ.

La prescription angulaire du premier exemple, visant la tangente à la surface **17** latérale au niveau de son extrémité **21** inférieure, reste valable. En l'occurrence, dans l'exemple illustré, où le récipient **9** à réaliser présente une forme plus bombée dans sa partie inférieure, la surface **17** latérale est plus ouverte avec, à son extrémité **21** inférieure, un angle α de tangente de 13° environ.

Il est à noter que, au jeu près, la dimension transversale du fond **6** de moule, mesurée sur le bord **29** périphérique de sa surface **7** supérieure, est égale à la dimension transversale du bord **22** supérieur de l'ouverture **5.**

Cet exemple de réalisation permet d'obtenir un récipient **9** sensiblement identique à celui du premier exemple.

Il résulte des configurations décrites dans les deux exemples de réalisation ci-dessus un certain nombre d'avantages par rapport aux formes de réalisation connues, telle que celle décrite plus haut en référence aux figures 1 à 5.

En effet, dans cette forme de réalisation connue, l'arête vive formée par le bord **22** supérieur de l'ouverture **5** risque de provoquer lors du soufflage de l'ébauche **8** le cisaillement de la matière, comme cela est illustré sur la figure 2. Pour éviter un tel cisaillement, on a coutume de remonter le fond de moule relativement tôt, ce qui a pour effet de limiter l'étirage du fond **6** du récipient **9.**

Au contraire, dans les exemples de réalisation décrits en référence aux figures 6 à 17, le fond **6** du récipient peut être étiré dans une plus grande mesure que dans les moules connus, car l'absence (pour l'exemple 1) ou la minimisation (pour l'exemple 2) d'une arête vive sous l'extrémité **21** inférieure de la paroi **2** fait que la matière ne subit aucun cisaillement (dans l'exemple 1), ou très peu (dans l'exemple 2). Le fond **6** de moule peut par conséquent être maintenu dans sa position basse plus longtemps avant que sa remontée ne soit commandée, ce qui accroît l'étirage de la matière non seulement au niveau du fond **14**, mais également à la jonction entre le fond **14** et le corps **13**.

L'étirage supplémentaire permet de mieux répartir la matière sur l'ensemble du fond **14**, et d'y réduire la quantité de matière amorphe, notamment dans le pion **25**, au bénéfice de la rigidité structurelle du fond **14** au niveau de l'assise.

Par ailleurs, dans le récipient **9** conforme à la réalisation connue, le rayon du congé **16** de raccordement entre le corps **13** et le fond **14** est relativement grand au regard de la demi dimension transversale (c'est-à-dire du rayon) du fond **14**, dans un rapport supérieur à 1/10 environ (par exemple, pour un récipient en PET d'une capacité de 0,5 l, dont le fond **6** présente un rayon de 30 mm, le rayon du congé **16** est généralement supérieur à 5 mm). Cette caractéristique dimensionnelle résulte des contraintes de fabrication, la déformation que peut subir la matière compte tenu de sa viscosité (liée à la température de chauffe), de son épaisseur (liée au taux d'étirage) et de la pression de soufflage ne permettant pas de diminuer le rayon du congé **16b,** sauf à voir apparaître dans celui-ci des amorces de rupture en raison de surcontraintes locales.

Au contraire, dans les deux exemples de réalisation, le plus grand étirement de la matière, et la diminution subséquente de son épaisseur, permettent d'accroître sa déformabilité et de réaliser un congé **16** dont le rayon est faible devant la demi dimension (c'est-à-dire le rayon) du fond **14**, dans un rapport inférieur à 1/50 environ. Ainsi, pour un récipient réalisé en PET, d'une capacité de 0,5 I et dont le fond **14** présente un rayon de 30mm, à profil de chauffe et pression de soufflage inchangés, le rayon du congé **16** peut être inférieur à 1 mm, par exemple de l'ordre de 0,5 mm.

La jonction, dans le moule **1**, entre la surface **17** latérale d'une part et la surface **7** supérieure du fond **6** (dans l'exemple 1) ou la surface **19** supérieure du rebord **18** annulaire (dans l'exemple 2), sous forme d'un pan coupé, permet de réaliser un tel congé.

Au total, le fond **14** du récipient **9** présente une assise **28** déportée au maximum vers la périphérie du fond **14**, avec un congé **16** de raccordement avec le corps **13** de faible rayon, comme cela est expliqué ci-dessus. La jonction entre le fond **14** et le corps **13** du récipient apparaît donc plus « carrée » que dans les formes de réalisation connues, au bénéfice de la stabilité du récipient **9**.

## Revendications

1. Moule (**1**) pour la fabrication, par soufflage à partir d'ébauches en matière plastique, de récipients (**9**) ayant un corps (**13**) et un fond (**14**), ce moule (**1**) comprenant une paroi (**2**) définissant une cavité (**3**) répartie autour d'un axe (**4**) principal du moule (**1**) et comprenant une surface (**17**) latérale destinée à conférer sa forme au corps (**13**) du récipient (**9**), ladite paroi (**2**) présentant, dans une partie inférieure, une ouverture (**5**) définissant un passage pour un fond (**6**) de moule dont une surface (**7**) supérieure est destinée à conférer au moins en partie sa forme au fond (**14**) du récipient (**9**), cette ouverture (**5**) présentant un bord (**22**) supérieur, ledit moule (**1**) comprenant en outre un fond (**6**) de moule présentant une surface (**7**) supérieure formant une empreinte d'un fond (**6**) de récipient et étant monté mobile par rapport à la paroi (**2**) entre une position basse dans laquelle le fond (**6**) de moule est écarté de l'ouverture (**5**), et une position haute dans laquelle le fond (**6**) de moule obture l'ouverture (**5**) ; Ce moule étant **caractérisé en ce que**, dans tout plan contenant l'axe (**4**) de la paroi (**2**) :
- le rapport entre une dimension (**B**) transversale du bord (**22**) supérieur de l'ouverture (**5**) et une dimension (**A**) transversale d'une extrémité (**21**) inférieure de la surface (**17**) latérale de la paroi (**2**) est supérieur à 0,95,
- la tangente à la surface (**17**) latérale de la paroi (**2**), à l'extrémité (**21**) inférieure de celle-ci, forme avec l'axe (**4**) de la paroi (**2**) un angle (α) inférieur ou égal à 30°,
- la surface (**7**) supérieure du fond (**6**) de moule présente, sur sa périphérie, une portion (**30**) annulaire qui s'étend sensiblement dans un plan radial, la tangente à la surface (**7**) supérieure du fond (**6**) de moule, au niveau de son bord (**29**) extérieur, formant avec un axe de déplacement du fond (**6**) de moule un angle (β) droit ou sensiblement droit.

2. Moule (**1**) selon la revendication 1, **caractérisé en ce que** la tangente à la surface (**17**) latérale de la paroi (**2**), à l'extrémité (**21**) inférieure de celle-ci, forme avec l'axe (**4**) de la paroi un angle (α) inférieur ou égal à 10°.

3. Moule (**1**) selon la revendication 1 ou 2, **caractérisé en ce que** le rapport entre la dimension (**B**) transversale du bord (**22**) supérieur de l'ouverture (**5**) et la dimension (**A**) transversale de l'extrémité (**21**) inférieure de la surface (**17**) latérale de la paroi (**2**) est égal à 1.

4. Moule (**1**) selon la revendication 1 ou 2, **caractérisé en ce que** la paroi (**2**) présente, autour de l'ouverture (**5**), un rebord (**18**) annulaire présentant une surface (**19**) supérieure radiale, et **en ce que** la paroi (**2**) est dépourvue de congé de raccordement à la jonction entre la surface (**17**) latérale et cette surface (**19**) supérieure radiale.

5. Moule (**1**) selon l'une des revendications 1 à 4, **caractérisé en ce qu'**une dimension (**B**) transversale, mesurée au niveau du bord (**29**) de la surface (**7**) supérieure du fond (**6**) de moule, est égale, au jeu de fonctionnement près, à la dimension (**A**) transversale du bord (**22**) supérieur de l'ouverture (**5**).

6. Utilisation d'un moule (**1**) selon l'une des revendications 1 à 5 pour la fabrication de récipients (**9**) par étirage soufflage.

7. Récipient (**9**) en matière plastique, comprenant un corps (**13**) et un fond (**14**) ayant une dimension (**B**) transversale prédéterminée, et présentant un congé (**16**) de raccordement à la jonction entre le corps (**13**) et le fond (**14**), ce récipient (**9**) étant **caractérisé en ce que** le rapport du rayon du congé (**16**) de raccordement et de la demi dimension transversale du fond (**14**) est inférieur à 1/50 environ.

8. Récipient (**9**) selon la revendication 7, **caractérisé en ce que** le rayon du congé (**16**) de raccordement est inférieur à 1 mm.

9. Récipient (**9**) selon la revendication 8, **caractérisé en ce que** le rayon du congé (**16**) de raccordement est égal à 0,5 mm environ.

## Patentansprüche

1. Form (1) für die Herstellung, durch Blasen, ausgehend von Rohlingen aus Plastikmaterial, von Behältern (9), die einen Körper (13) und einen Boden (14) haben, wobei diese Form (1) eine Wand (2) umfasst, die einen Hohlraum (3) definiert, der um eine Hauptachse (4) der Form (1) verteilt ist und eine seitliche Oberfläche (17) umfasst, die dazu bestimmt ist, dem Körper (13) des Behälters (9) seine Form zu verleihen, wobei die Wand (2) in einem unteren Teil eine Öffnung (5) aufweist, die eine Passage für einen Boden (6) der Form definiert, von dem eine obere Oberfläche (7) dazu bestimmt ist, dem Boden (14) des Behälters (9) mindestens zum Teil seine Form zu verleihen, wobei diese Öffnung (5) einen oberen Rand (22) aufweist, wobei die Form (1) außerdem einen Formboden (6) umfasst, der eine obere Oberfläche (7) aufweist, die einen Abdruck eines Behälterbodens (6) bildet und in Bezug zu der Wand (2) zwischen einer Tiefstellung, in der der Formboden (6) von der Öffnung (5) beabstandet ist, und einer Hochstellung, in der der Formboden (6) den Verschluss (5) verschließt, beweglich montiert ist,
wobei die Form **dadurch gekennzeichnet ist, dass** in jeder Ebene, die die Achse (4) der Wand (2) enthält:
- das Verhältnis zwischen einem Quermaß (B) des oberen Rands (22) der Öffnung (5) und einem Quermaß (A) eines unteren Endes (21) der seitlichen Oberfläche (17) der Wand (2) größer ist als 0,95,
- die Tangente zu der seitlichen Oberfläche (17) der Wand (2) an ihrem unteren Ende (21) mit der Achse (4) der Wand (2) einen Winkel (α) kleiner oder gleich 30° bildet,
- die obere Oberfläche (7) des Formbodens (6) auf ihrem Umfang einen ringförmigen Abschnitt (30) aufweist, der sich im Wesentlichen in einer radialen Ebene erstreckt, wobei die Tangente zu der oberen Oberfläche (7) des Formbodens (6) im Bereich ihres äußeren Rands (29) mit einer Bewegungsachse des Formbodens (6) einen rechten oder im Wesentlichen rechten Winkel (β) bildet.

2. Form (1) nach Anspruch 1, **dadurch gekennzeichnet, dass** die Tangente zu der seitlichen Oberfläche (17) der Wand (2) an ihrem unteren Ende (21) mit der Achse (4) der Wand einen Winkel (α) kleiner oder gleich 10° bildet.

3. Form (1) nach Anspruch 1 oder 2, **dadurch gekennzeichnet, dass** das Verhältnis zwischen dem Quermaß (B) des oberen Rands (22) der Öffnung (5) und dem Quermaß (A) des unteren Endes (21) der seitlichen Oberfläche (17) der Wand (2) gleich 1 ist.

4. Form (1) nach Anspruch 1 oder 2, **dadurch gekennzeichnet, dass** die Wand (2) um die Öffnung (5) eine ringförmige Krempe (18) aufweist, die eine radiale obere Oberfläche (19) aufweist, und dass die Wand (2) keine Anschlusskehle an der Verbindung zwischen der seitlichen Oberfläche (17) und dieser radialen oberen Oberfläche (19) besitzt.

5. Form (1) nach einem der Ansprüche 1 bis 4, **dadurch gekennzeichnet, dass** ein Quermaß (B), das in dem Bereich des Rands (29) der oberen Oberfläche (7) des Formbodens (6) gemessen wird, bis auf das Betriebsspiel gleich dem Quermaß (A) des oberen Rands (22) der Öffnung (5) ist.

6. Verwendung einer Form (1) nach einem der Ansprüche 1 bis 5 für die Herstellung von Behältern (9) durch Streckblasen.

7. Behälter (9) aus Plastikmaterial, der einen Körper (13) und einen Boden (14), der ein vorbestimmtes Quermaß (B) hat und eine Anschlusskehle (16) an der Verbindung zwischen dem Körper (13) und dem Boden (14) aufweist, umfasst, wobei der Behälter (9) **dadurch gekennzeichnet ist, dass** das Verhältnis des Radius der Anschlusskehle (16) und des halben Quermaßes des Bodens (14) kleiner ist als etwa 1:50.

8. Behälter (9) nach Anspruch 7, **dadurch gekennzeichnet, dass** der Radius der Anschlusskehle (16) kleiner ist als 1 mm.

9. Behälter (9) nach Anspruch 8, **dadurch gekennzeichnet, dass** der Radius der Anschlusskehle (16) gleich etwa 0,5 mm ist.

## Claims

1. Mould (1) for the manufacture, by blow-moulding from plastic parisons, of containers (9) having a body (13) and a bottom (14), this mould (1) comprising a wall (2) defining a cavity (3) distributed about a main axis (4) of the mould (1) and comprising a lateral surface (17) intended to give the body (13) of the container (9) its shape, the said wall (2) having, in a lower part, an opening (5) defining a passage for a mould bottom (6) of which an upper surface (7) is intended at least in part to give the bottom (14) of the container (9) its shape, this opening (5) having an upper edge (22), the said mould (1) further comprising a mould bottom (6) having an upper surface (7) forming an impression of a bottom (6) of a container and being mounted with the ability to move with respect to the wall (2) between a lowered position in which the mould bottom (6) is away from the opening (5) and a raised position in which the mould bottom (6) closes off the opening (5);
this mould being **characterized in that**, in any plane containing the axis (4) of the wall (2):
- the ratio between a transverse direction (B) of the upper edge (22) of the opening (5) and a transverse dimension (A) of a lower end (21) of the lateral surface (17) of the wall (2) is greater than 0.95,
- the tangent to the lateral surface (17) of the wall (2), at the lower end (21) thereof, makes, with the axis (4) of the wall (2), an angle (α) less than or equal to 30°,
- the upper surface (7) of the mould bottom (6) has, on its periphery, an annular portion (30) extending substantially in a radial plane, the tangent to the upper surface (7) of the mould bottom (6) at the outer edge (29) thereof making, with an axis of movement of the mould bottom (6), an angle (ß) that is a right angle or substantially a right angle.

2. Mould (1) according to Claim 1, **characterized in that** the tangent to the lateral surface (17) of the wall (2) at the lower end (21) thereof makes, with the axis (4) of the wall, an angle (α) less than or equal to 10°.

3. Mould (1) according to Claim 1 or 2, **characterized in that** the ratio between the transverse dimension (B) of the upper edge (22) of the opening (5) and the transverse dimension (A) of the lower end (21) of the lateral surface (17) of the wall (2) is equal to 1.

4. Mould (1) according to claim 1 or 2, **characterized in that** the wall (2) has, around the opening (5), an annular lip (18) having a radial upper surface (19), and **in that** the wall (2) has no fillet at the junction between the lateral surface (17) and this radial upper surface (19).

5. Mould (1) according to one of Claims 1 to 4, **characterized in that** a transverse dimension (B), measured at the edge (29) of the upper surface (7) of the mould bottom (6) is equal, to within the operating tolerance, to the transverse dimension (A) of the upper edge (22) of the opening (5).

6. Use of a mould (1) according to one of Claims 1 to 5 for the manufacture of containers (9) by stretch-blow-moulding.

7. Plastic container (9) comprising a body (13) and a bottom (14) having a predetermined transverse dimension (B) and having a fillet (16) at the junction between the body (13) and the bottom (14), this container (9) being **characterized in that** the ratio of the radius of the fillet (16) to half the transverse dimension of the bottom (14) is less than around 1/50.

8. Container (9) according to Claim 7, **characterized in that** the radius of the fillet (16) is less than 1 mm.

9. Container (9) according to Claim 8, **characterized in that** the radius of the fillet (16) is equal to around 0.5 mm.
